# EUROPÄISCHE PATENTSCHRIFT

(11) **EP 2 659 559 B1**
(45) Veröffentlichungstag und Bekanntmachung des Hinweises auf die Patenterteilung: **26.11.2014**
(21) Anmeldenummer: 11833879.7
(22) Anmeldetag: 20.06.2011
(51) Int. Cl.: H02G 3/08, H01R 13/627

(54) **Verriegelung für ein Steckverbindergehäuse**
Locking device for a plug-in connector housing
Verrouillage pour un boîtier de connecteur enfichable

(30) Priorität: 19.10.2010 DE 102010038266
(43) Veröffentlichungstag der Anmeldung: 06.11.2013
(73) Patentinhaber: Harting Electric GmbH & Co. KG, 32339 Espelkamp (DE)
(72) Erfinder: SCHMIDT, Martin, 32312 Lübbecke (DE); SPILKER, Nicole, 32312 Lübbecke (DE)
(86) Internationale Anmeldenummer: PCT/DE2011/075138
(87) Internationale Veröffentlichungsnummer: WO 2012/052008

(56) Entgegenhaltungen:
- EP-A1- 2 194 217
- FR-A- 765 795

## Beschreibung

Die Erfindung betrifft eine Verriegelungsvorrichtung für ein mehrteiliges Steckverbindergehäuse mit einem Gehäuseoberteil und einem dazu passenden Gehäuseunterteil, wobei das Gehäuseoberteil und das Gehäuseunterteil über ein Federblech reversibel miteinander mechanisch verbindbar sind, wobei das Federblech im Inneren des Gehäuseoberteils und/oder des Gehäuseunterteils angeordnet ist.

Derartige Verriegelungsvorrichtungen werden benötigt, um beispielsweise zwei Steckverbindergehäuseteile miteinander verliersicher zu verrasten und wieder zu entrasten. Die Verriegelungsvorrichtungen sind derart auszugestalten, dass das Innenleben des Steckverbindergehäuses nach der Verriegelung vor Umwelteinflüssen, wie beispielsweise Flüssigkeiten und Staub, geschützt ist.

Das Innenleben eines ent- und verriegelbaren Steckverbindergehäuses kann aus Kontaktelementen und/oder so genannten Kontaktmodulen bestehen, wie sie beispielsweise in der noch unveröffentlichten PCT/EP 2009/008779 gezeigt werden.

### Stand der Technik

Die EP 2 194 217 A1 zeigt eine lösbare Verriegelung für ein mehrteiliges Steckverbindergehäuse. Ein erstes Gehäuseteil umfasst beidseitig Betätigungsknöpfe, die jeweils auf ihnen zugeordnete elastische Federelemente einwirken, die im Gehäuseinneren angeordnet sind. Über Öffnungen im Federblech, die mit innenliegenden Rasthaken eines zweiten Gehäuseteils zusammenwirken, werden das erste und zweite Gehäuseteil miteinander verriegelt.

Nachteilig bei derartigen Verriegelungsvorrichtungen ist, dass beide Betätigungsknöpfe zugleich bedient werden müssen, um eine Ver- bzw. Entriegelung zu bewirken. Außerdem beansprucht ein derartiges Verriegelungssystem viel Bauraum innerhalb des Steckverbindergehäuses. Dadurch fallen derartige Steckverbinder relativ groß und unhandlich aus.

### Aufgabenstellung

Die Aufgabe der Erfindung besteht darin, ein Verriegelungssystem für mehrteilige Steckverbindergehäuse vorzuschlagen, das kompakt und gleichzeitig zuverlässig ausgeführt ist.

Die Aufgabe wird durch die Merkmale des Anspruchs 1 gelöst.

Vorteilhafte Ausgestaltungen der Erfindung sind in den Unteransprüchen angegeben.

Die hier gezeigte Verriegelungsvorrichtung ist für ein mehrteiliges Steckverbindergehäuse vorgesehen. Ein derartiges Steckverbindergehäuse besteht aus einem Gehäuseoberteil und einem dazu passenden Gehäuseunterteil. Das Gehäuseoberteil verfügt über einen einzelnen, von außen bedienbaren Betätigungsknopf. Im Inneren des Gehäuseoberteils ist außerdem ein Federblech verliersicher eingeklemmt.

Der Betätigungsknopf befindet sich innerhalb einer kreisförmigen Ausnehmung am Gehäuseoberteil. Bei Betätigung des Betätigungsknopfes wird dieser in die Ausnehmung eingedrückt. Die daraus resultierende Kraft wird auf das im Gehäuseinneren eingeklemmte Federblech übertragen.

Der außen liegende Betätigungsknopf steht demnach in Wirkverbindung mit dem innen liegenden Federblech. Das Federblech verbindet beide Gehäuseteile mechanisch miteinander. Über die auf das Federblech ausgeübte Kraft sind die Gehäuseteile miteinander ver- und entriegelbar. Die mechanische Verbindung beider Gehäuseteile über das Federblech ist demnach reversibel ausgeführt. Der genaue Mechanismus dazu wird weiter unten beschrieben.

An zumindest einer Innenwand des Gehäuseunterteils ist zumindest eine Rastnase angeformt. In der Regel werden zwei Rastnasen an gegenüberliegenden Innenwänden des Gehäuseunterteils angeformt sein.

Das Federblech enthält zumindest eine Rastöffnung, die über die Rastnase(n) des Gehäuseunterteils greift, so dass das Gehäuseoberteil und das Gehäuseunterteil verliersicher miteinander verbunden sind. Die Anzahl der Rastöffnungen entspricht zwangsläufig der Anzahl der Rastnasen.

Wird der außenliegende Betätigungsknopf des Steckverbinders eingedrückt, wird die daraus resultierende Kraft auf das innen liegende Federblech übertragen. Dadurch bewegen sich die Rastarme des Federblech derart zueinander hin, dass die Rastöffnungen der Rastarme über die Rastnasen des Gehäuseunterteils hinweg gleiten. Die Rastöffnungen der Rastarme greifen nicht mehr über die Rastnasen, so dass das Federblech (bzw. die Rastöffnungen desselben) nicht mehr in Wirkverbindung mit den Rastnasen steht. Die Gehäuseteile können nun voneinander getrennt werden.

Wird der Betätigungsknopf betätigt, bevor die Gehäuseteile zusammengefügt wurden, kann das Gehäuseoberteil nahezu mühelos auf das zugehörige Gehäuseunterteil aufgesetzt werden. Nach anschließenden Loslassen des Betätigungsknopfes, greifen die Rastöffnungen des Federblechs (wieder) auf die Rastnasen des Gehäuseunterteils ein. Durch Betätigung des Betätigungsknopfes ist demnach eine verriegelnde Verbindung oder eine entriegelnde Verbindung zwischen den beiden Gehäuseteilen möglich.

Die beiden Gehäuseteile können aber auch einfach - ohne Betätigung des Betätigungsknopfes - zusammen geführt werden. Die Rastarme des Federblechs gleiten in diesem Fall zunächst über die Rastnasenkontur hinweg, bis die Rastnasen schlussendlich in die Rastöffnungen eingreifen. Dieser Vorgang wird auch als "Zusammenstecken" der Gehäusehälften bezeichnet.

In einer vorteilhaften Ausführungsform der Erfindung ist der Betätigungsknopf als kombinierter Dreh- und Druckknopf ausgebildet. Durch eine Vierteldrehung in eine beliebige Richtung, wird der Betätigungsknopf gesperrt. Das bedeutet, dass ein Eindrücken (also ein Betätigen) des Betätigungsknopfes nicht mehr möglich ist. Erst durch eine Drehung in die entgegen gesetzte Richtung wird der Betätigungsknopf wieder entsperrt. Dadurch wird eine versehentliche Betätigung des Betätigungsknopfes verhindert.

Vorteilhafterweise ist eine Drehrichtung entgegen des Uhrzeigersinns zur Sperrung des Betatigungsknoptes vorgesehen.

Vorteilhafterweise ist die Oberfläche des Betätigungsknopfes aufgeraut ausgeführt, so dass sich der Betätigungsknopf leicht mit dem Daumen drehen lässt.

Es kann aber auch vorteilhaft sein, wenn der Betätigungsknopf eine Ausnehmung umfasst, in welche ein Werkzeug einführbar ist, mit welchem die Drehbewegung realisiert werden kann.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Federblechs,
- Fig. 2: eine perspektivische Darstellung eines Gehäuseoberteils mit integriertem Federblech verrastet mit einem Gehäuseunterteil,
- Fig. 3: einen Schnitt III-III aus Figur 2 durch beide miteinander verrastete Gehäusehälften,
- Fig. 4: den Schnitt III-III durch beide noch unverrastete Gehäusehälften,
- Fig. 5: eine perspektivische Rückansicht eines Betätigungsknopfes,
- Fig. 6: eine perspektivische Frontansicht des Betätigungsknopfes,
- Fig. 7: einen Schnitt VII-VII der miteinander verriegelten Gehäuseteile aus Figur 3,
- Fig. 8: eine perspektivische Seitenansicht der miteinander Verrasteten Gehäuseteile,
- Fig. 9: einen Schnitt IX-IX aus Figur 8.

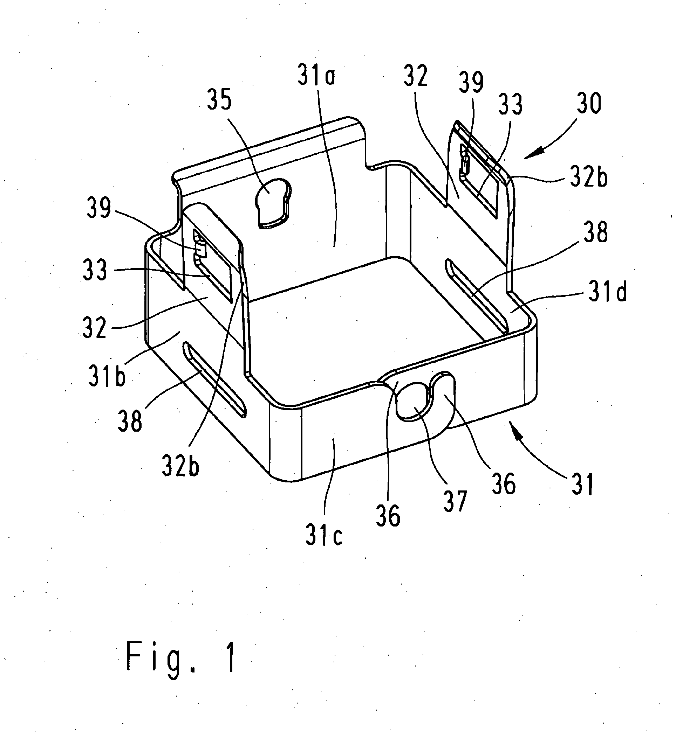

Die Figur 1 zeigt eine perspektivische Darstellung eines Federblechs 30. Das Federblech 30 wird aus einem Blechstück ausgestanzt und mithilfe von Biegetechnik in eine im wesentlichen rechteckige, rahmenförmige Grundsstruktur 31 geformt. Von dieser Grundstruktur 31 gehen zwei Rastarme 32 ab, die einander gegenüberliegen und zueinander parallel angeordnet sind.

Beide Rastarme 32 weisen eine Rastöffnung 33 auf. Innerhalb der Öffnungen 33 ist jeweils ein Rasthaken 39 angeformt. Die Rasthaken 39 sind jeweils leicht nach innen, also zueinander hin, gebogen.

Eine Rahmenwand 31a weist eine Erhebung auf, die endseitig nach außen gebogen ist. Die Rahmenwand 31a umfasst außerdem eine schlüssellochförmige Öffnung 35. Die gegenüberliegende Rahmenwand 31 c wird aus zwei zueinander laufenden Teilen gebildet, deren hakenförmige Enden 36 sich derart überlappen, dass sie eine Öffnung 37 miteinander einschließen.

Die Rahmenwände 31b und 31 d umfassen jeweils eine Ausnehmung 38. Diese Ausnehmung 38 stellt einen Teil der Fixierung des Federblechs 30 in einem Gehäuseoberteil 20 eines Steckverbindergehäuses 1 dar.

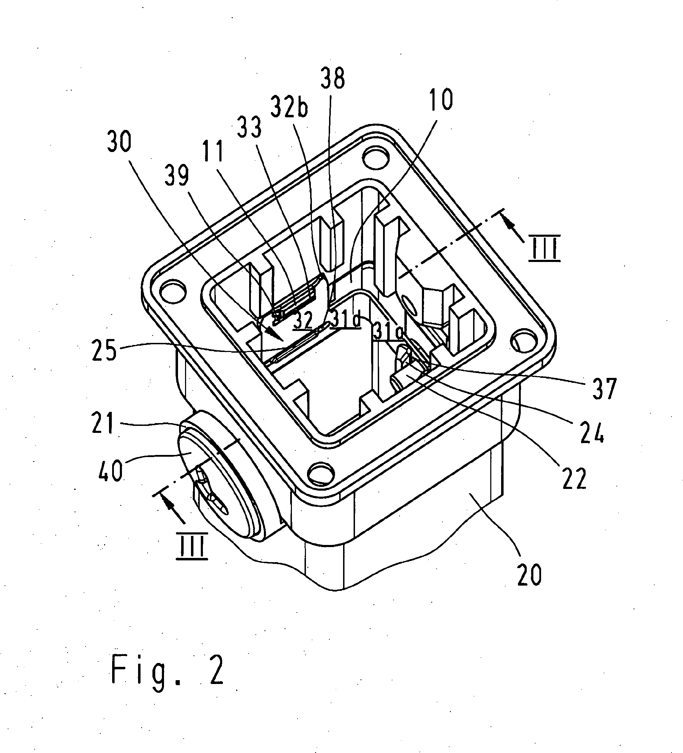

Die Figur 2 zeigt eine perspektivische Darstellung des Gehäuseoberteils 20 welches mit einem Gehäuseunterteil 10 verrastet ist. Innerhalb des Gehäuseoberteils 20 ist das Federblech 30 verliersicher eingeklemmt.

Das Gehäuseoberteil 20 ist im wesentlichen kastenförmig ausgebildet. An zwei gegenüberliegenden Innenwänden des Gehäuseoberteils 20 sind Stege 25 angeformt, die in die Ausnehmungen 38 des Federblechs 30 eingreifen. Die Ausnehmungen 38 sind länger ausgebildet als die Stege 25, so dass die Stege 25 in den Ausnehmungen 38 beidseitig etwas Spiel haben und dadurch die Kraftausbringung durch den Betätigungsknopf auf das Federblech ermöglichen.

Auch das mit dem Gehäuseoberteil 20 verrastete Gehäuseunterteil 10 ist im wesentlichen kastenförmig ausgebildet. Zwei gegenüberliegende Innenwände des Gehäuseunterteils 10 umfassen jeweils Rastnasen 11. Die Rastnasen 11 greifen in die Öffnungen 33 des Federblechs 30 ein, so dass die Gehäusehälften 10, 20 über das Federblech 30 verliersicher miteinander verbunden sind.

Eine Gehäusewand des Gehäuseoberteils 20 umfasst eine Bohrung, durch welche ein Bolzen 22 ins Gehäuseinnere ragt. Der Bolzenstiel wird von einem an der Innenwand des Gehäuseoberteils 20 angeformten gabelartigen Gebilde 24 umschlossen. Die hakenförmigen Enden 36 des Federblechs 30, die eine Öffnung 37 miteinander einschließen, umgreifen den Bolzenstiel im Gehäuseinneren. Die Rahmenwand 31c des Federblechs 30 befindet sich zwischen dem gabelartigen Gebilde 24 und der Gehäuseinnenwand.

Die Innenwände des Gehäuseoberteils 20, die die Stege 25 umfassen und die Innenwände des Gehäuseunterteils 10, die die Rastnasen 11 umfassen, fluchten beim Aufeinanderstecken der Gehäusehälften 10, 20 zueinander.

### Trennen der Gehäusehälften

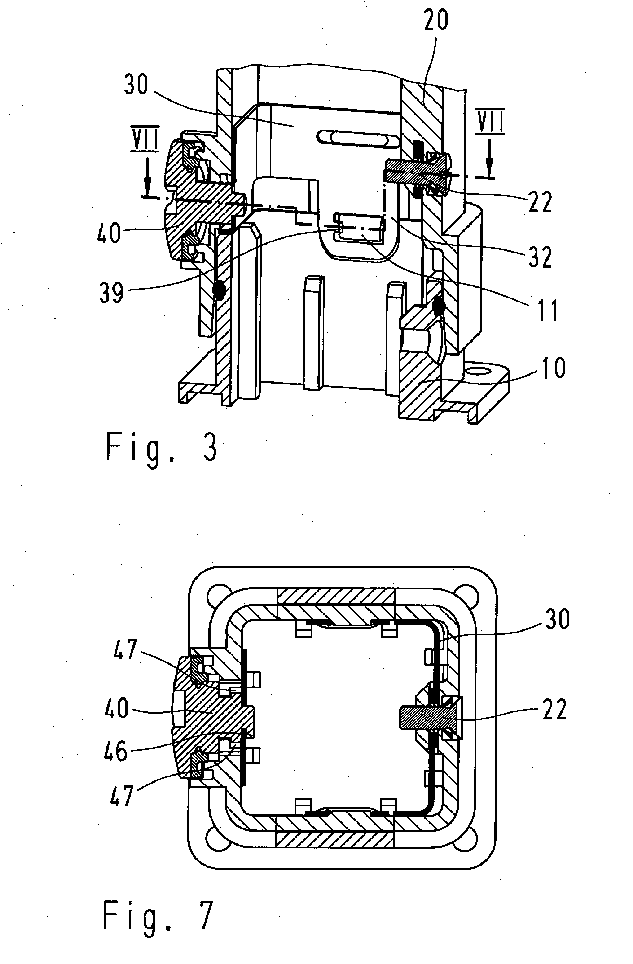

Die Figur 3 zeigt den Schnitt III-III der verrasteten Gehäusehälften 10, 20 aus Figur 2. Beim Eindrücken des Betätigungsknopfes 40 in Richtung des Gehäuseinneren, werden die Rastarme 32 des Federblechs 30 entlang der Innenwände des Gehäuseunterteils 10 und des Gehäuseoberteils 20 verschoben. Wie bereits oben erwähnt, bieten die Ausnehmungen 38 das dafür nötige Spiel. Die Rasthaken 39 der Rastöffnungen 33 gleiten auf den Rastnasen 11 des Gehäuseunterteils 10 ab. Dadurch werden die Rastarme 32 zueinander hin gebogen, so dass die Öffnungen 33 der Rastarme 32 des Rastblechs 30 aus der Rastverbindung mit den Rastnasen 11 geführt werden. Die Gehäusehälften können jetzt voneinander getrennt werden.

### Verriegeln der Gehäusehälften

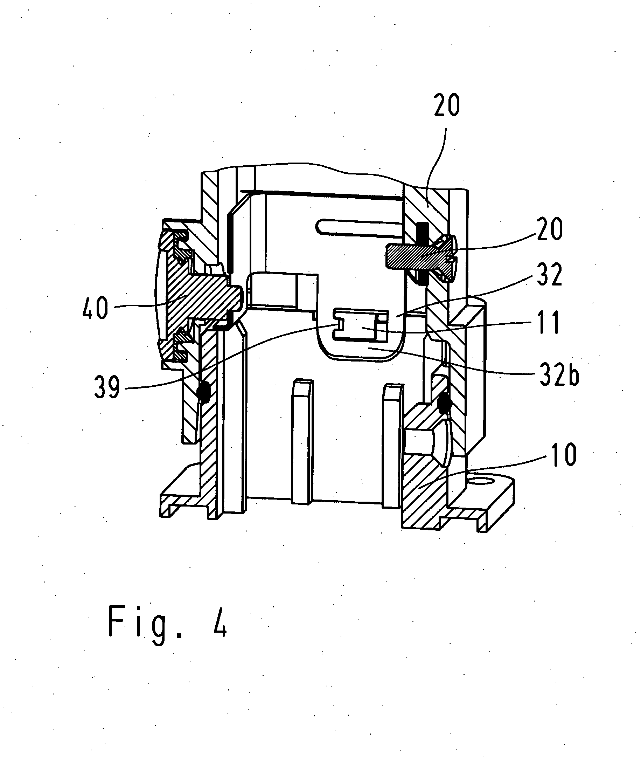

Die Figur 4 zeigt ebenfalls den Schnitt III-III. Allerdings sind die Gehäusehälften 10, 20 hier noch unverriegelt. Über seinen nach innen gebogenen Bereich 32b wird der Rastarm 32 des Rastblechs 30 beim Verriegelungsvorgang über die Rastnase 11 der unteren Gehäusehälfte 10 geschoben. Die Rastarme 32 biegen dabei leicht nach innen zueinander hin ein. Beim weiteren Zusammenführen der Gehäusehälften 10, 20 schnappen die Rastarme 32 nach außen zurück, sobald die Öffnungen 33 der Rastarme 32 über die Rastnasen 11 übergreifen. Dadurch wird eine verlierfeste Verbindung beider Gehäusehälften 10, 20 erreicht.

Anzumerken ist, dass eine Abdeckung des Gehäuseoberteils 20, an der ein so genannter Kabelabgang vorgesehen ist, in den hier offenbarten Figuren aus darstellerischen Gründen nicht gezeigt ist.

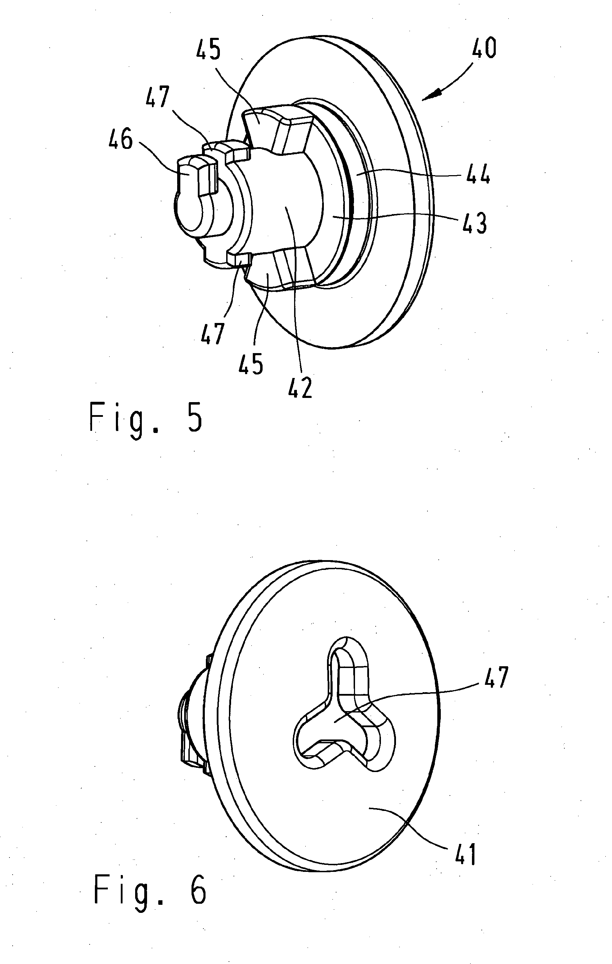

Die Figur 5 zeigt die perspektivische Rückansicht und die Figur 6 zeigt die perspektivische Frontansicht des Betätigungsknopfes 40. Der Betätigungsknopf 40 besteht im wesentlichen aus einer scheibenförmigen Druckfläche 41. Bedienseitig ist in die Druckfläche 41 eine kleeblattförmige Ausnehmung 47 eingearbeitet. In die Ausnehmung 47 kann ein passendes Werkzeug zur radialen Drehbewegung des Betätigungsknopfes 40 eingeführt werden.

Rückseitig von der Druckfläche 41 ist zunächst ein Bund 43 mit einer umlaufenden Nut 44 angeformt. Der Bund 43 umfasst zwei erhabene Sperrstrukturen 45, die eine zylinderförmige Anformung 42 einschließen, die senkrecht vom Bund 43 abgeht und die (im zusammengebauten Zustand) in das Innere des Gehäuseoberteils 20 hineinragt. Die Sperrstrukturen 45 haben in etwa die Form einer stumpfen Dreiecksäule.

Endseitig umfasst die zylinderförmige Anformung 42 einen Sperrhaken 46. Weiter unterhalb sind beidseitig so genannte Knebel 47 an der Anformung 42 angebracht.

Figur 7 zeigt einen Schnitt VII-VII aus Figur 3 der miteinander verriegelten Gehäuseteile. Die zylinderförmige Anformung 42 des Betätigungsknopfes 40 ragt ins Innere des verriegelten Steckverbindergehäuses.

Der Sperrhaken 46 der Anformung 42 durchdringt dabei auch die schlüsselförmige Öffnung 35 der Rahmenwand 31 a des im Gehäuseoberteil 20 verrasteten Federblechs 30. Die Knebel 47 der Anformung 42 verbleiben auf der anderen Seite der Rahmenwand 31a. Das Federblech 30 ist in diesem Bereich zwischen Sperrhaken 46 und Knebel 47 angeordnet. Beim Eindrücken des Betätigungsknopfes 40 wird über die Knebel 47 eine Kraft auf das Federblech 30 ausgeübt. Wie oben bereits beschrieben, gleiten dadurch die Öffnungen 33 der Rastarme 32 des Federblechs 30 über die Rastnasen 11 des Gehäuseunterteils 10 weg.

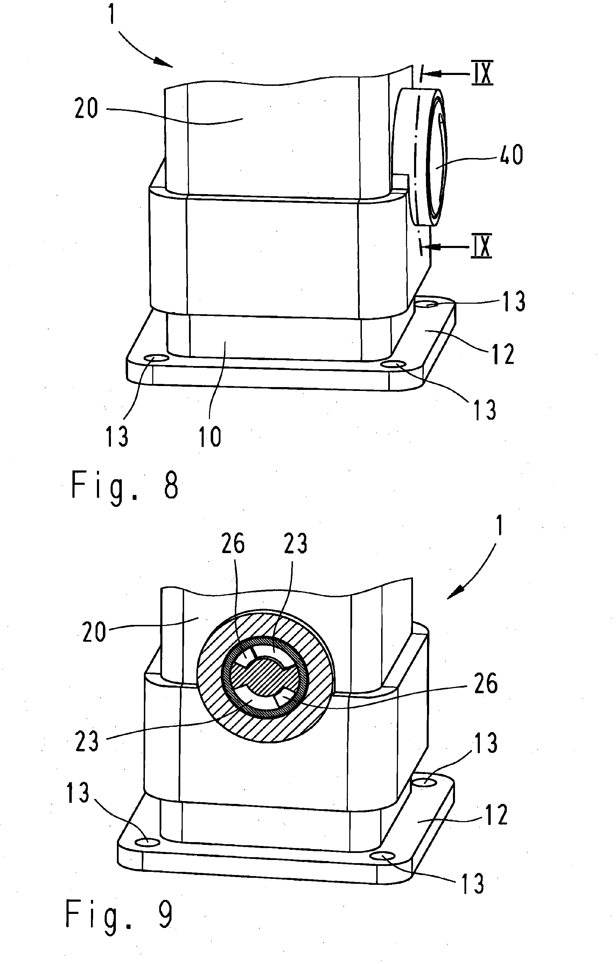

Die Figur 8 zeigt eine perspektivische Seitenansicht der miteinander Verrasteten Gehäuseteile 10, 20. Die Figur 9 zeigt den Schnitt IX-IX aus der Figur 8. Zu sehen sind zwei Anschläge 26, die entlang der kreisförmigen Ausnehmung 21 des Gehäuseoberteils 20 angeformt sind. Außerdem sind durch die Ausnehmung 21 Lamellen 23 zu sehen, die sich weiter innerhalb des Gehäuseoberteils 20 befinden wie die Anschläge 26. Die Funktion der Anschläge 26 und der Lamellen 23 wird weiter unten erläutert. Im Zusammengebauten Zustand befinden sich die Sperrstrukturen 45 des Betätigungsknopfes 40 in einer gemeinsamen Ebene mit den Anschlägen 26 der kreisförmigen Ausnehmung 21 des Gehäuseoberteils 20.

Wie bereits oben erwähnt wurde, kann der Betätigungsknopf 40 gesperrt werden, um eine versehentliche Betätigung zu vermeiden. Im ungesperrten Zustand befinden sich die Sperrstrukturen 45 des Betätigungsknopfes 40 gemeinsam in einer Ebene, die parallel zur Grundfläche 12 des Gehäuseunterteils 10 ausgerichtet ist.

Bei einer radialen Drehung des Betätigungsknopfes 40 um etwa 90° entgegen des Uhrzeigersinns, werden die Sperrstrukturen 45 des Betätigungsknopfes 40 gegen die Anschläge 26 der Ausnehmung 21 des Gehäuseoberteils 20 geführt. Die Ebene der Sperrstrukturen 45 nimmt jetzt einen in etwa rechten Winkel zur Grundflächenebene 12 ein. Die Lamellen verhindern ein Eindrücken (Betätigen) des Betätigungsknopfes 40, da die Sperrstrukturen 45 des Betätigungsknopfes 40 nun auf den Lamellen 23 aufliegen.

Durch eine radiale Drehbewegung des Betätigungsknopfes 40 in entgegen gesetzter Drehrichtung, wird die Sperrung des Betätigungsknopfes 40 wieder aufgehoben.

Für weitere Details der Sperrfunktion des Betätigungsknopfes sei hier auf die EP 2 194 217 A1 verwiesen.

Das Gehäuseunterteil 10 umfasst Bohrungen 13, die es ermöglichen, dass das Gehäuseunterteil 10 beispielsweise an eine Maschinenwand angebracht werden kann.

**Bezugszeichenliste**

| **1** | **Steckverbindergehäuse** | | |
|---|---|---|---|
| **10** | **Gehäuseunterteil** | **40** | **Betätigungsknopf** |
| 11 | Rastnasen | 41 | Druckfläche |
| 12 | Grundfläche | 42 | Zylinderförmige Anformung |
| 13 | Bohrungen | 43 | Bund |
| | | 44 | Nut |
| **20** | **Gehäuseoberteil** | 45 | Sperrstruktur |
| 21 | Kreisförmige Ausnehmung | 46 | Sperrhaken |
| 22 | Bolzen | 47 | Knebel |
| 23 | Lamelle | | |
| 24 | Gabelartiges Gebilde | | |
| 25 | Steg | | |
| 26 | Anschlag | | |
| | | | |
| **30.** | **Federblech** | | |
| 31. | Rahmenförmige Grundsstruktur | 36 | Hakenförmiges Ende |
| 31 a-d | Rahmenwand | 37 | Öffnung |
| 32. | Rastarm | 38 | Ausnehmungen |
| 32b | Gebogener Bereich des Rastarms | 39 | Rasthaken |
| 33. | Rastöffnung | | |
| 34. | | | |
| 35. | schlüssellochförmige Öffnung | | |

## Patentansprüche

1. Verriegelungsvorrichtung für ein mehrteiliges Steckverbindergehäuse (1) mit einem Gehäuseoberteil (20) und einem dazu passenden Gehäuseunterteil (10),
➢ wobei das Gehäuseoberteil (20) und das Gehäuseunterteil (10) über ein Federblech (30) reversibel miteinander mechanisch verbindbar sind,
➢ wobei das Federblech (30) im Inneren des Gehäuseoberteils (20) und/oder des Gehäuseunterteils (10) angeordnet ist,
➢ das Federblech (30) in Wirkverbindung mit einem einzelnen, außen liegenden Betätigungsknopf (40) steht
**dadurch gekennzeichnet, dass**
das Federblech (30) eine rechteckige, rahmenförmige Grundsstruktur (31) aufweist, und zwei gegenüberliegende, parallele Rastarme (32) umfasst, die jeweils die zumindest eine Rastöffnung (33) umfassen.

2. Verriegelungsvorrichtung nach Anspruch 1
**dadurch gekennzeichnet,**
➢ **dass** das Federblech (30) im Inneren des Gehäuseoberteils (20) verliersicher einklemmbar ist,
➢ wobei das Federblech (30) zumindest eine Rastöffnung (33) umfasst,
➢ und wobei die Rastöffnung (33) mit zumindest einer Rastnase (11) verrastbar ist, wobei die Rastnase (11) im Inneren des Gehäuseunterteils (10) angeformt ist.

3. Verriegelungsvorrichtung nach einem der vorstehenden Ansprüche **dadurch gekennzeichnet,**
➢ **dass** über den Betätigungsknopf (40) eine Kraft auf das Federblech (30) übertragbar ist,
➢ **so dass** die zumindest eine Rastnase (11) des Gehäuseunterteils (10) aus der zumindest einen Rastöffnung (33) des Federblechs (30) herausführbar ist,
➢ **so dass** das Gehäuseoberteil (20) und das Gehäuseunterteil (10) voneinander trennbar sind.

4. Verriegelungsvorrichtung nach einem der vorstehenden Ansprüche
**dadurch gekennzeichnet, dass**
der außen liegende Betätigungsknopf (40) innerhalb einer kreisförmigen Ausnehmung (21) am Gehäuseoberteil (20) angeordnet ist.

5. Verriegelungsvorrichtung nach einem der vorstehenden Ansprüche
**dadurch gekennzeichnet, dass**
das Gehäuseunterteil (10) zwei gegenüberliegende, zueinander parallele Rastnasen (11) umfasst.

6. Verriegelungsvorrichtung nach einem der vorstehenden Ansprüche
**dadurch gekennzeichnet, dass**
der Betätigungsknopf (40) als kombinierter Dreh- und Druckknopf ausgebildet ist.

7. Verriegelungsvorrichtung nach einem der vorstehenden Ansprüche
**dadurch gekennzeichnet, dass**
das Federblech (30) bei Betätigung des Betätigungsknopfes (40) eine verriegelnde Verbindung oder eine entriegelnde Verbindung zwischen den beiden Gehäuseteilen (10, 20) bewirkt.

## Claims

1. A locking device for a multipart plug connector housing (1) comprising an upper housing part (20) and a matching lower housing part (10),
➢ the upper housing part (20) and the lower housing part (10) being adapted to be reversibly mechanically connected to each other by means of a spring steel sheet (30),
➢ the spring steel sheet (30) being arranged in the interior of the upper housing part (20) and/or the lower housing part (10),
➢ the spring steel sheet (30) being operatively connected to a single external actuating button (40),
**characterized in that**
the spring steel sheet (30) has a rectangular, frame-shaped basic structure (31) and includes two opposite, parallel detent arms (32) which each include the at least one detent opening (33).

2. The locking device according to claim 1,
**characterized in that**
➢ the spring steel sheet (30) is adapted to be captively clamped in the interior of the upper housing part (20),
➢ the spring steel sheet (30) including at least one detent opening (33),
➢ and the detent opening (33) being adapted to be locked with at least one detent nose (11), the detent nose (11) being integrally formed in the interior of the lower housing part (10).

3. The locking device according to either of the preceding claims, **characterized in that**
➢ a force can be transmitted to the spring steel sheet (30) via the actuating button (40),
➢ so that the at least one detent nose (11) of the lower housing part (10) can be moved out of the at least one detent opening (33) of the spring steel sheet (30),
➢ so that the upper housing part (20) and the lower housing part (10) are detachable from each other.

4. The locking device according to any of the preceding claims,
**characterized in that**
the external actuating button (40) is arranged within a circular recess (21) on the upper housing part (20).

5. The locking device according to any of the preceding claims,
**characterized in that**
the lower housing part (10) includes two opposite detent noses (11) parallel to each other.

6. The locking device according to any of the preceding claims,
**characterized in that**
the actuating button (40) is in the form of a combined rotary and push button.

7. The locking device according to any of the preceding claims,
**characterized in that**
upon actuation of the actuating button (40), the spring steel sheet (30) effects a locking connection or an unlocking connection between the two housing parts (10, 20).

## Revendications

1. Dispositif de verrouillage pour un boîtier (1) de connecteur enfichable en plusieurs parties, présentant une partie supérieure de boîtier (20) et une partie inférieure de boîtier (10) correspondante,
➢ la partie supérieure de boîtier (20) et la partie inférieure de boîtier (10) étant aptes à être mécaniquement reliées l'une à l'autre de manière réversible au moyen d'une tôle à ressort (30),
➢ la tôle à ressort (30) étant agencée à l'intérieur de la partie supérieure de boîtier (20) et/ou de la partie inférieure de boîtier (10),
➢ la tôle à ressort (30) étant en liaison fonctionnelle avec un bouton de commande (40) extérieur individuel,
**caractérisé en ce que**
la tôle à ressort (30) présente une structure de base (31) rectangulaire en forme de cadre et comprend deux bras d'enclenchement (32) opposés et parallèles lesquels comprennent chacun ledit au moins un orifice d'enclenchement (33).

2. Dispositif de verrouillage selon la revendication 1,
**caractérisé en ce que**
➢ la tôle à ressort (30) est apte à être serrée de manière imperdable à l'intérieur de la partie supérieure de boîtier (20),
➢ la tôle à ressort (30) présentant au moins un orifice d'enclenchement (33),
➢ et l'orifice d'enclenchement (33) étant apte à s'enclencher avec au moins un nez d'enclenchement (11), le nez d'enclenchement (11) étant moulé d'un seul tenant à l'intérieur de la partie inférieure de boîtier (10).

3. Dispositif de verrouillage selon l'une des revendications précédentes, **caractérisé en ce que**
➢ une force peut être transmise à la tôle à ressort (30) par l'intermédiaire du bouton de commande (40),
➢ de telle sorte que ledit au moins un nez d'enclenchement (11) de la partie inférieure de boîtier (10) peut être guidé hors dudit au moins un orifice d'enclenchement (33) de la tôle à ressort (30),
➢ de telle sorte que la partie supérieure de boîtier (20) et la partie inférieure de boîtier (10) peuvent être séparées l'une de l'autre.

4. Dispositif de verrouillage selon l'une des revendications précédentes,
**caractérisé en ce que**
le bouton de commande (40) extérieur est agencé à l'intérieur d'un évidement (21) circulaire sur la partie supérieure de boîtier (20).

5. Dispositif de verrouillage selon l'une des revendications précédentes,
**caractérisé en ce que**
la partie inférieure de boîtier (10) comprend deux nez d'enclenchement (11) opposés et parallèles l'un par rapport à l'autre.

6. Dispositif de verrouillage selon l'une des revendications précédentes,
**caractérisé en ce que**
le bouton de commande (40) est réalisé sous forme de bouton tournant et de pression combiné.

7. Dispositif de verrouillage selon l'une des revendications précédentes,
**caractérisé en ce que**
lors de l'actionnement du bouton de commande (40), la tôle à ressort (30) provoque une liaison de verrouillage ou une liaison de déverrouillage entre les deux parties de boîtier (10, 20).
